Europäisches Patentamt

European Patent Office

Office européen des brevets

(19)

(11) Numéro de publication: **0 087 346**
**B1**

## (12) FASCICULE DE BREVET EUROPEEN

(45) Date de publication du fascicule du brevet:
**12.06.85**

(51) Int. Cl.⁴: **C 01 B 17/90**

(21) Numéro de dépôt: **83400260.2**

(22) Date de dépôt: **07.02.83**

(54) Procédé de régénération d'acides sulfuriques résiduaires souillés par des matières organiques.

(30) Priorité: **22.02.82 FR 8202866**

(43) Date de publication de la demande:
**31.08.83 Bulletin 83/35**

(45) Mention de la délivrance du brevet:
**12.06.85 Bulletin 85/24**

(84) Etats contractants désignés:
**BE CH DE FR GB IT LI**

(56) Documents cités:
**US - A - 2 793 180**
**US - A - 2 793 181**
**US - A - 3 616 337**
**US - A - 3 917 521**

(73) Titulaire: **SOCIETE FRANCAISE HOECHST Société anonyme dite:, 3, avenue du Général de Gaulle, F-92800 Puteaux (FR)**

(72) Inventeur: **Peron, Jacques, 89, rue de Paris, F-60200 Compiegne (FR)**

(74) Mandataire: **Rinuy, Santarelli et al, 14, avenue de la Grande Armée, F-75017 Paris (FR)**

ACTORUM AG

## Description

La présente invention concerne un procédé de régénération d'acides sulfuriques résiduaires souillés par des matières organiques.

Des quantités relativement importantes d'acides sulfuriques résiduaires souillés par des matières organiques sont rejetées par l'industrie chimique de synthèse. Ces acides sulfuriques résiduaires, généralement très colorés, presque noirs, présentent ordinairement un titre compris entre 50 et 75% en poids d'acide sulfurique à 100%; ils contiennent habituellement de 0,5 à 5% de matières organiques exprimées en poids de carbone pour 100 g de solution et leur demande chimique en oxygène, désignée par la suite DCO, déterminée selon la norme française NF T 90-101 de septembre 1971, est couramment comprise entre 2000 et 30000 mg/l. De ce fait, ces acides sulfuriques résiduaires offrent une faible valeur marchande et leur destruction sans engendrer de pollutions secondaires exige une neutralisation préalable coûteuse. De plus, leur manipulation est délicate, car ils sont d'autant plus corrosifs vis-à-vis des aciers que leur titre est plus faible.

Leur régénération en vue de leur recyclage éventuel a fait l'objet de nombreux travaux. Généralement, l'élimination des impuretés organiques est réalisée par oxydation soit à l'aide d'oxydants extrinsèques tels que le peroxyde d'hydrogène, l'acide nitrique, l'acide hypochloreux ou à l'aide d'oxydants formés in situ tels que les acides persulfuriques, soit par des procédés électrochimiques, (cf. US-A N° 2793180 et US-A N° 2793181). Il est connu aussi d'utiliser un chauffage prolongé vers 200°C, suivi d'une filtration effectuée en présence de terre d'infusoires.

Or, la titulaire a découvert avec étonnement que, en combinant successivement une concentration classique à une oxydation électrochimique à la régénération d'acides sulfuriques résiduaires souillés par des matières organiques, elle obtenait de bien meilleurs résultats pour une dépense énergétique bien moindre. En effet, la titulaire s'est aperçue que le rendement énergétique d'oxydation par voie électrochimique est amélioré de façon surprenante si l'acide à régénérer a subi au préalable une concentration classique à une température non supérieure à 155°C.

Selon le procédé de l'invention, l'acide sulfurique souillé par des matières organiques est soumis d'abord à une concentration classique sous pression réduite, ordinairement comprise entre 0,08 et 0,16 bar et à une température de l'ordre de 135±20°C jusqu'à obtention d'un titre en acide sulfurique compris entre 75 et 85%, puis il est traité, à chaud, sous agitation, par un procédé électrochimique dans un électrolyseur, sans diaphragme, équipé d'une anode en platine ou en ses alliages avec le rhodium ou l'iridium et d'une cathode en graphite, en régime galvanostatique avec une densité de courant anodique comprise entre 0,05 et 0,5 A/cm². Au cours de l'électrolyse, le milieu réactionnel se décolore progressivement, et simultanément le titre en acide sulfurique croît légèrement. Il est aisé de suivre cette régénération par la détermination de la DCO d'une prise d'essai. De manière à limiter des phénomènes secondaires, il est avantageux de conduire l'électrolyse à une température comprise entre 70 et 90°C, préférentiellement aux environs de 85°C avec une densité de courant anodique de l'ordre de 0,2 A/cm². L'électrolyse est réalisée sous une tension de quelques volts, supérieure à 2 V et généralement comprise entre 2 et 12 V. Lorsque la DCO déterminée sur une prise d'essai atteint une valeur inférieure ou égale à 1000 mg/l, l'oxydation est arrêtée et l'acide sulfurique ainsi purifié est, si nécessaire, concentré selon des moyens connus en soi jusqu'à obtention du titre désiré.

L'acide sulfurique résiduaire ainsi purifié est incolore, il peut être chauffé plusieurs heures à des températures de l'ordre de 150±20°C sans modification appréciable de sa coloration.

Les exemples suivants illustrent l'invention sans toutefois la limiter.

*Exemple 1:*

On soumet un acide sulfurique résiduaire provenant d'une fabrication par voie photochimique d'alcanesulfonates, présentant un titre de 60,81% et une densité à 20°C de 1,511, à une concentration classique sous un vide de 0,12 bar et à une température de 135°C de manière à obtenir un titre de 76,30%. A ce stade, il présente une DCO de 24000 mg/l et une densité à 20°C de 1,685.

Dans un électrolyseur de 2 l, chauffé extérieurement par une plaque chauffante et équipé d'une agitation, d'une anode constituée par une toile de platine de 196 mailles/cm², de masse 14 g et de surface 62 cm², d'une cathode en graphite de section 1 cm² et de longueur immergée 154 mm, ces deux électrodes étant reliées aux bornes respectives d'un générateur de courant continu, on place 3370 g d'acide sulfurique résiduaire provenant de la concentration précédente.

Puis le milieu réactionnel est chauffé à 85±2°C et, à cette température et sous agitation, on fait débiter dans le circuit électrique de l'électrolyseur un courant continu d'intensité 14±0,1 A sous une tension de 6±0,6 V.

On suit l'avancement de la régénération par des déterminations successives de la DCO sur des prises d'essais.

Le tableau I donne les valeurs obtenues en fonction du temps et de la quantité de courant électrique consommé exprimé en ampères-heure (Ah).

*(Tableau en page suivante)*

Après 49 h de fonctionnement, on obtient un acide sulfurique incolore présentant une DCO de 800 mg/l et un titre de 81,1%.

*Exemple 2 comparatif:*

Dans le même électrolyseur que celui décrit à l'exemple 1, on régénère, dans les mêmes conditions de température, d'agitation, d'intensité et de tension électriques, un acide sulfurique provenant d'une fabrication par voie photochimique, d'alcanesulfonates mais n'ayant subi aucune concentration préalable.

*Tableau I*

| Temps (h) | Quantité de courant consommé (Ah) | Coloration (unités APHA) | DCO (mg/l) |
|---|---|---|---|
| 0 | 0 | — | 24 000 |
| 1 | 14 | — | 22 000 |
| 3 | 42 | — | 19 000 |
| 5 | 70 | 28 000 | 15 400 |
| 9 | 126 | 24 000 | 9 500 |
| 14 | 196 | 800 | 4 600 |
| 21 | 294 | — | 2 450 |
| 25 | 350 | incolore | 1 650 |
| 29 | 406 | incolore | 1 350 |
| 33 | 462 | incolore | 900 |
| 49 | 686 | incolore | 800 |

Caractéristiques de l'acide de départ:

Titre:                                   60,36%
DCO:                              21 000 mg/l
Poids:                                  3370 g
Coloration:                        brun-noir

En suivant, comme dans l'exemple 1, la diminution de la DCO en fonction de la quantité de courant consommé, on obtient les résultats suivants mentionnés dans le tableau II.

*Tableau II*

| Temps (h) | Quantité de courant consommé (Ah) | Coloration exprimée (unités APHA) | DCO mesurée (mg/l) |
|---|---|---|---|
| 0 | 0 | — | 21 000 |
| 2 | 28 | — | 17 800 |
| 5 | 70 | 5500 | 13 400 |
| 6,5 | 91 | 3200 | 11 800 |
| 9,5 | 133 | 800 | 8 500 |
| 14 | 196 | 10 | 6 100 |
| 16 | 224 | incolore | 5 650 |
| 18 | 252 | incolore | 4 600 |
| 22 | 308 | incolore | 3 800 |
| 26 | 364 | incolore | 2 450 |
| 31,5 | 441 | incolore | 1 500 |
| 37,5 | 525 | incolore | 900 |

Après 37,5 h de fonctionnement, on obtient un acide sulfurique purifié incolore présentant une DCO de 900 mg/l et un titre en acide sulfurique de 73,8%.

On note que, pour obtenir la même diminution de DCO sur deux acides sulfuriques résiduaires de même provenance, le deuxième procédé, sans concentration préalable, exige une quantité de courant supérieure.

Dans le tableau III, on indique l'énergie électrique consommée exprimée en kilowatts-heures par kilo d'acide sulfurique à 100% en fonction de la diminution de la DCO.

Ce tableau montre l'économie d'énergie réalisée grâce au procédé de l'invention.

*Tableau III*

| Diminution de DCO (mg/l) | Energie électrique consommée (kWh/kg d'acide sulfurique à 100%) | |
|---|---|---|
| | Exemple 1 | Exemple 2 comparatif |
| 2 000 | 0,0325 | — |
| 3 200 | — | 0,1 |
| 5 000 | 0,1 | — |
| 7 600 | — | 0,230 |
| 8 600 | 0,165 | — |
| 9 200 | — | 0,300 |
| 12 500 | — | 0,440 |
| 14 500 | 0,295 | — |
| 14 900 | — | 0,650 |
| 15 450 | — | 0,740 |
| 16 400 | — | 0,835 |
| 17 200 | — | 1,020 |
| 18 550 | — | 1,210 |
| 19 400 | 0,460 | — |
| 19 500 | — | 1,460 |
| 20 100 | — | 1,74 |
| 21 550 | 0,690 | — |
| 22 350 | 0,820 | — |
| 22 650 | 0,950 | — |
| 23 100 | 1,080 | — |
| 23 200 | 1,600 | — |

Il va de soi que l'invention n'a été décrite qu'à titre purement explicatif et nullement limitatif et que toute modification utile pourra y être apportée sans sortir de son cadre.

**Revendication**

Procédé de régénération par une oxydation électrochimique d'acides sulfuriques résiduaires souillés par des matières organiques, caractérisé par le fait que l'on combine successivement et dans l'ordre une concentration sous pression réduite et à une température inférieure ou égale à 155°C jusqu'à obtention d'un acide présentant un titre pondéral en acide sulfurique compris entre 75 et 85%, puis une oxydation électrochimique dans un électrolyseur sans diaphragme conduite à une température comprise entre 70 et 90°C.

**Patentanspruch**

Verfahren zum Regenerieren von mit organischer Materie verureinigter Restschwefelsäure durch elektrochemische Oxidation, dadurch gekennzeichnet, dass aufeinanderfolgend in dieser Reihenfolge kombiniert wird: eine Konzentrierung unter herabgesetztem Druck und einer Temperatur geringer als oder gleich 155°C, bis eine Säure erhalten wird, die einen Gewichtsanteil an Schwefelsäure zwischen 75 und 85% zeigt, gefolgt von einer elektrochemischen oxidation in einem Elektrolyseur ohne Membran, durchgeführt bei einer Temperatur zwischen 70 und 90°C.

## Claim

A process for electro-chemical oxidation regeneration of residual, organic material-contaminated sulfuric acids, characterized by combining successively, in this order, a reduced pressure concentration at a temperature lower than or equal to 155°C until obtaining an acid of a sulfuric acid titre by weight of between 75 and 85% and, then, an electro-chemical oxidation in an electrolyzer without diaphragm, carried out at a temperature of between 70 and 90°C.